# EUROPÄISCHE PATENTSCHRIFT

(11) **EP 2 817 592 B1**
(45) Veröffentlichungstag und Bekanntmachung des Hinweises auf die Patenterteilung: **28.03.2018**
(21) Anmeldenummer: 13702598.7
(22) Anmeldetag: 24.01.2013
(51) Int. Cl.: G01D 5/244, H02P 25/02, H03M 1/10

(54) **KALIBRIERUNG UND ÜBERWACHUNG EINES WINKELMESSSYSTEMS FÜR ELEKTRISCHE MASCHINEN**
CALIBRATING AND MONITORING AN ANGLE DETECTING SYSTEM FOR ELECTRICAL MACHINES
ETALONNAGE ET SURVEILLANCE D'UN SYSTÈME DE DÉTECTION D'ANGLE DE MACHINES ÉLECTRIQUES

(30) Priorität: 23.02.2012 DE 102012202772
(43) Veröffentlichungstag der Anmeldung: 31.12.2014
(73) Patentinhaber: Robert Bosch GmbH, 70442 Stuttgart (DE); SEG Automotive Germany GmbH, 70499 Stuttgart (DE)
(72) Erfinder: MEHRINGER, Paul, 70569 Stuttgart (DE); KAEPPLE, Mario, 74613 Oehringen (DE); ROESNER, Julian, 74199 Untergruppenbach (DE)
(86) Internationale Anmeldenummer: PCT/EP2013/051280
(87) Internationale Veröffentlichungsnummer: WO 2013/124113

(56) Entgegenhaltungen:
- DE-A1- 19 711 463
- DE-A1-102008 001 408
- DE-A1-102009 055 141

## Beschreibung

Die vorliegende Erfindung betrifft eine elektrische Maschine mit einem Winkelmesssystem.

### Stand der Technik

Die Druckschrift DE 10 2009 029 396 A1 betrifft ein Verfahren zum Betreiben einer elektrischen Maschine, bei dem die elektrische Maschine einen Stator und einen Rotor aufweist und die Winkellage des Rotors zu dem Stator über ein Resolver-Prinzip bestimmt wird. Das Resolver-Prinzip basiert darauf, dass mittels einer Spule, d.h. entweder der Rotorwicklung oder der Stator-Wicklung, innerhalb der elektrischen Maschine ein Magnetfeld aufgebaut wird. Dieses Magnetfeld induziert in der jeweils anderen Wicklung eine Spannung, deren Parameter von der Winkellage des Rotors zu dem Stator abhängt. Wird diese induzierte Spannung ausgewertet, so kann folglich auf die Winkellage geschlossen werden, ohne dass die elektrische Maschine einen zusätzlichen Sensor aufweisen muss.

Die Druckschrift DE102008001408 beschreibt eine Winkelkalibrierung für Synchronmaschinen, wobei als Standard ein bekannter Feldwinkel eingestellt wird bzw. ein Feldwinkel eingestellt wird, der sich erfassen lässt. Ein zugehöriger Sensorwinkel wird gemessen, wobei sich eine Zuordnung zwischen bekanntem oder erfasstem Feldwinkel und dem gemessenen Sensorwinkel ergibt. Dadurch lässt sich ein Offsetwinkel bestimmen, der bei der Winkelmessung zukünftig berücksichtigt wird, wobei der Sensorwinkel um den ermittelten Offsetwinkel beispielsweise rechnerisch korrigiert wird, um den Feldwinkel vorzusehen.

### Offenbarung der Erfindung

Es ist die der Erfindung zugrundeliegende Aufgabe, die Zuverlässigkeit einer Winkelmessung zu erhöhen.

Diese Aufgabe wird durch Gegenstände nach den unabhängigen Ansprüchen gelöst. Vorteilhafte Ausführungsformen der Erfindung sind Gegenstand der Figuren, der Beschreibung und der abhängigen Ansprüche.

Die vorliegende Erfindung basiert auf der Erkenntnis, dass die Messung eines Winkellagegebers durch eine Winkelmessung anhand der Polradspannung überprüft werden kann.

### Vorteile der Erfindung

Gemäß einem Aspekt wird die erfindungsgemäße Aufgabe durch eine elektrische Maschine gelöst, mit einem Winkellagegeber zum Bestimmen eines ersten Drehwinkels eines Läufers, einer Ständerwicklung zum Erzeugen eines Magnetfeldes, einem Spannungsmesser zum Erfassen einer Polradspannung an den Enden der Ständerwicklung bei einer Drehung des Läufers, und einer Bestimmungsschaltung zum Bestimmen eines zweiten Drehwinkels aus der Polradspannung und zum Bestimmen eines Winkelunterschieds zwischen dem ersten und dem zweiten Drehwinkel. Dadurch wird beispielsweise der technische Vorteil erreicht, dass auch während des Betriebs im Fahrzeug regelmäßig eine Plausibilisierung des Winkelsignals durchgeführt werden kann, so dass eventuelle Änderungen beispielsweise bedingt durch eine Verdrehung, einen Einfluss von Fremdkörpern oder eine Entmagnetisierung erkannt werden. Insbesondere wird der Vorteil erreicht, dass auf einfache und kostengünstige Weise die Nulllage des Winkelsignals bestimmt wird und sowohl ein erstmaliges Einlernen als auch eine nachträgliche Überprüfung des Winkelsignals ermöglicht wird.

In einer vorteilhaften Ausführungsform umfasst die elektrische Maschine einen nicht-flüchtigen Speicher zum Speichern des Winkelunterschieds. Dadurch wird beispielsweise der technische Vorteil erreicht, dass der Winkelunterschied dauerhaft für die Korrektur eines Drehwinkels zur Verfügung steht.

In einer weiteren vorteilhaften Ausführungsform umfasst die elektrische Maschine eine Erregerwicklung auf dem Läufer und einen Strombegrenzer zum Begrenzen eines maximalen Erregerstroms in der Erregerwicklung. Dadurch wird beispielsweise der technische Vorteil erreicht, dass die erzeugte Polradspannung über den Strombegrenzer eingestellt werden kann.

In einer weiteren vorteilhaften Ausführungsform ist der Strombegrenzer ausgebildet, die Polradspannung in Abhängigkeit der Drehzahl durch Einstellen des maximalen Erregerstroms unterhalb einer Referenzspannung einzustellen. Dadurch wird beispielsweise der technische Vorteil erreicht, dass ein Überschreiten der Referenzspannung, beispielsweise einer Bordnetzspannung, verhindert wird und kein Strom fließt, der aufgrund der Ständerinduktivitat die Phasenlage des Spannungssignals verändert.

In einer weiteren vorteilhaften Ausführungsform umfasst die elektrische Maschine einen Vergleicher zum Vergleichen der Polradspannung mit einer Referenzspannung, um ein Vergleichssignal zu erzeugen. Dadurch wird beispielsweise der technische Vorteil erreicht, dass eine Winkelkalibrierung in Abhängigkeit des gewonnenen Vergleichssignals durchgeführt werden kann.

In einer weiteren vorteilhaften Ausführungsform ist der Vergleicher ausgebildet, das Vergleichssignal auszugeben, sobald die Polradspannung die Referenzspannung unterschreitet. Dadurch wird beispielsweise der technische Vorteil erreicht, dass ein Signal dann ausgegeben wird, wenn kein Strom fließt der die Phasenlage der Polradspannung verändert.

In einer weiteren vorteilhaften Ausführungsform ist die Bestimmungsschaltung ausgebildet, den Winkelunterschied bei Vorliegen des Vergleichssignals zu bestimmen. Dadurch wird beispielsweise der technische Vorteil erreicht, dass die Winkelkalibrierung besonders exakt durchgeführt wird.

In einer weiteren vorteilhaften Ausführungsform ist die Bestimmungsschaltung ausgebildet, den ersten Drehwinkel um den Winkelunterschied zu korrigieren, um einen korrigierten Drehwinkel zu erhalten. Dadurch wird beispielsweise der technische Vorteil erreicht, dass ein Drehwinkel erhalten wird, der die Lage des Läufers zuverlässig widerspiegelt.

In einer weiteren vorteilhaften Ausführungsform ist die Bestimmungsschaltung ausgebildet, den korrigierten Drehwinkel mit dem zweiten Drehwinkel zu vergleichen. Dadurch wird beispielsweise der technische Vorteil erreicht, dass die Zuverlässigkeit der Winkelmessung erhöht wird.

In einer weiteren vorteilhaften Ausführungsform ist die Bestimmungsschaltung ausgebildet, ein Fehlersignal auszugeben, falls der korrigierte Drehwinkel und der zweiten Drehwinkel voneinander abweichen. Dadurch wird beispielsweise der technische Vorteil erreicht, dass ein Fehlbetrieb der elektrischen Maschine verhindert wird.

In einer weiteren vorteilhaften Ausführungsform umfasst die elektrische Maschine eine Ansteuervorrichtung zum Erzeugen eines Drehfelds synchron zum korrigierten ersten Drehwinkel. Dadurch wird beispielsweise der technische Vorteil erreicht, dass eine besonders präzise Ansteuerung des Läufers erreicht wird.

In einer weiteren vorteilhaften Ausführungsform ist die Anzahl der magnetischen Polpaare der elektrischen Maschine größer als eins. Dadurch wird beispielsweise der technische Vorteil erreicht, dass sich die Genauigkeit einer Kalibrierung erhöht.

Gemäß einem weiteren Aspekt wird die erfindungsgemäße Aufgabe durch ein Verfahren zum Betreiben einer elektrischen Maschine gelöst, mit den Schritten eines Erfassens eines ersten Drehwinkels eines Läufers der elektrischen Maschine durch einen Winkellagegeber, eines Erfassens einer Polradspannung an den Enden einer Ständerwicklung bei einer Drehung des Läufers, eines Bestimmens eines zweiten Drehwinkels aus der Polradspannung und eines Bestimmens eines Winkelunterschieds zwischen dem ersten und dem zweiten Drehwinkel. Dadurch lassen sich die gleichen Vorteile wie durch die elektrische Maschine nach dem ersten Aspekt erzielen.

In einer vorteilhaften Ausführungsform umfasst das Verfahren den Schritt eines Speicherns des Winkelunterschieds in einer Ansteuerelektronik. Dadurch wird beispielsweise der technische Vorteil erreicht, dass der bestimmte Winkelunterschied für beliebige weitere Datenverarbeitungsschritte zur Verfügung steht.

In einer vorteilhaften Ausführungsform umfasst das Verfahren den Schritt eines Ermittelns des Winkelunterschiedes an mehreren Positionen entlang des Rotorumfangs. Dadurch wird der Vorteil erreicht, dass der Winkelunterschied an mehr als einer Position entlang des Rotorumfangs ermittelt wird, und die Korrektur des Drehwinkels entlang des Rotorumfangs variiert. Durch das Ermitteln einer Vielzahl von Korrekturwerten wird die Sicherheit des Verfahrens weiter verbessert.

In einer vorteilhaften Ausführungsform umfasst das Verfahren den Schritt eines Korrigierens des ersten Drehwinkels um den Winkelunterschied, um einen korrigierten Drehwinkel zu erhalten. Dadurch wird beispielsweise ebenfalls der technische Vorteil erreicht, dass ein genauer und präziser Drehwinkel erhalten wird.

In einer vorteilhaften Ausführungsform umfasst das Verfahren den Schritt eines Erzeugens eines Drehfelds synchron zum korrigierten, ersten Drehwinkel. Dadurch wird beispielsweise ebenfalls der technische Vorteil erreicht, dass der Läufer der elektrischen Maschine präzise angesteuert wird.

### Kurze Beschreibung der Zeichnungen

Ausführungsbeispiele der Erfindung sind in der Zeichnung dargestellt und werden im Folgenden näher beschrieben.

Es zeigen:
Fig. 1 eine schematische Ansicht einer elektrischen Maschine;
Fig. 2 eine Schaltung für eine elektrische Maschine;
Fig. 3 ein Diagramm eines zeitlichen Verlaufs eines Winkelsensorsignals und einer Polradspannung für eine Maschine mit einem Polpaar;
Fig. 4 die Ausgangsspannungen bei Verwendung einer Komparatorik; und
Fig. 5 ein Diagramm eines zeitlichen Signalverlaufs von Winkelgeber und Phasenspannung für eine Maschine mit zwei Polpaaren.

### Ausführungsformen der Erfindung

Die vorliegende Erfindung kann beispielsweise bei Generatoren zur Umwandlung mechanischer Energie in elektrische Energie in Kraftfahrzeugen verwendet werden. Diese bestehen zumeist aus Klauenpolgeneratoren, die mit einer elektrischen Erregung ausgestattet sind. Da Klauenpolgeneratoren Drehstrom meist dreiphasig erzeugen, wird für die üblichen Kraftfahrzeug-Gleichspannungs-Bordnetze eine Gleichrichtung der erzeugten Spannung erzeugt, beispielsweise durch Gleichrichter auf Basis von Halbleiterdioden.

Daneben existieren zusätzlich Generatoren, die zusätzlich zum Starten eines Verbrennungsmotors verwendet werden können, auch Startergenerator genannt. In der Regel wird ein derartiger Startergenerator nur bei sehr kleinen Drehzahlen motorisch betrieben, da das erzeugbare Drehmoment bei höherer Drehzahl schnell abnimmt.

Weitere Generatoren, die auch zum Kraftfahrzeugantrieb eingesetzt werden, sind aus dem Bereich der Hybrid-Fahrzeuge bekannt. Diese Generatoren unterstützen den Verbrennungsmotor bei niedrigen Drehzahlen, bei denen dieser noch nicht sein volles Drehmoment liefert (Boostbetrieb, Turboloch-Kompensation). Im motorischen Betrieb wird in derartigen Antrieben ein Winkellagegeber verwendet, um ein winkelsynchrones Drehfeld in einer Ständerwicklung zu erzeugen.

Um den Winkellagegeber zu justieren, kann eine Phase des Generators bestromt werden. Dadurch richtet sich der Rotor in einer bestimmten Position aus, die als Nulllage erkannt wird. Allerdings ist die Reproduzierbarkeit einer derartigen Justage aufgrund von Reibungseffekten oder äußeren Momenten gering und das Verfahren ist im Betrieb schlecht anwendbar, nämlich nur im Stillstand und ohne äußeres Drehmoment. Weiter verursacht das Verfahren eine Verlustleistung und belastet eine Phase unsymmetrisch.

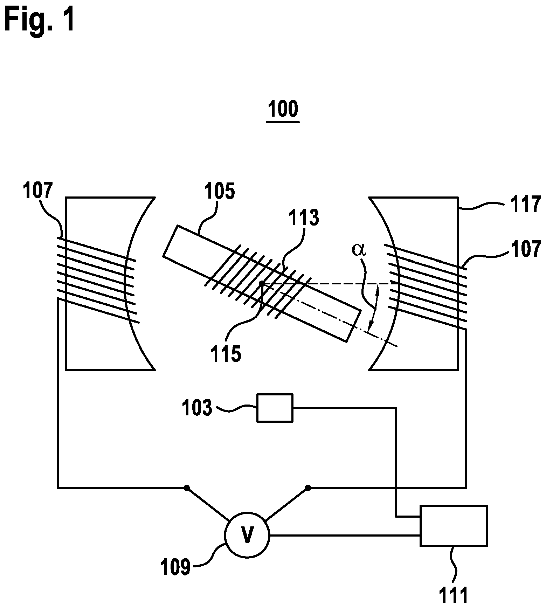

Fig. 1 zeigt eine schematische Ansicht der erfindungsgemäßen elektrischen Maschine 100. Die elektrische Maschine 100 umfasst einen Läufer 105, der drehbar um eine Drehachse 115 gelagert ist. Der Läufer 105 umfasst die Erregerwicklung 113. Der Läufer 105, auch Anker oder Rotor genannt, ist ein Teil einer elektromagnetisch wirkenden Maschine und bildet das bewegliche Teil der elektrischen Maschine.

Die Erregerwicklung 113 ist eine Spule aus Drahtwicklungen, die das magnetische Feld für die Energiewandlung, auch Hauptfeld oder Luftspaltfeld genannt, erzeugt, wenn diese von einem elektrischen Strom durchflossen wird. Dieser Strom wird Erregerstrom genannt.

Weiter umfasst die elektrische Maschine einen Stator oder Ständer 117. Der Stator 117 bildet den feststehenden Teil der elektrischen Maschine 100. Der Stator 117 bildet in vielen Fällen zugleich das Gehäuse der elektrischen Maschine 100 und besteht bei Elektromotoren und Generatoren aus geblechtem Stahl oder gegossenem Metall. Der Stator 117 dient als Kern und Träger der Ständerwicklung 107.

Durch die Ständerwicklung 107 wird beim Betrieb der elektrischen Maschine 100 ein Drehfeld erzeugt, das mit dem magnetischen Feld der Erregerwicklung koppelt, so dass der Läufer 105 in Drehung versetzt wird. Über die Ständerwicklung 107 wird im Generatorbetrieb der elektrischen Maschine 100 Elektroenergie in ein angeschlossenes Netz gespeist, während im Motorbetrieb Elektroenergie aus dem Netz bezogen wird.

Zur Erfassung eines Winkels des Läufers 105 umfasst die elektrische Maschine 100 einen Winkellagegeber 103. Der Winkellagegeber 103 ist ein Sensor zur Erfassung der aktuellen Lage des Läufers 105, damit ein winkelsynchrones Drehfeld in der Ständerwicklung 107 erzeugt werden kann. Als Winkellagegeber kann beispielsweise ein giant-magnetoresistiver Sensor (GMR-Sensor) oder ein Inkrementalgeber verwendet werden, die Winkeländerungen des Läufers erfassen.

Die Nullposition des vom Sensor erzeugten Winkelsignals ist abhängig von Einbautoleranzen. Daneben können die Signale des Sensors durch magnetische Felder in der Nähe des Sensors verfälscht werden.

Daher ist es vorteilhaft, die Absolutposition des Winkellagegebers 103 einmalig zu kalibrieren und in der Ansteuersoftware zu hinterlegen. Weiter ist es von Vorteil, auch während des Betriebs, beispielsweise beim Betrieb in einem Kraftfahrzeug, regelmäßig eine Plausibilisierung des erhaltenen Winkelsignals durchführen zu können, um eventuelle Fehlerquellen zu erkennen, beispielsweise bedingt durch eine Verdrehung, einen Einfluss von Fremdkörpern oder eine Entmagnetisierung.

Mit den Enden der Ständerwicklung 107 ist daher ein Spannungsmesser 109 verbunden. Sobald sich der Läufer 105 dreht und ein Strom durch die Erregerwicklung 113 fließt, wird in der Ständerwicklung eine Spannung induziert, auch Polradspannung genannt. Der Spannungsmesser 109 erfasst die induzierte Polradspannung. Gemäß der vorliegenden Erfindung wird daher die Polradspannung zum Abgleich der Winkelposition verwendet. Die Polradspannung kann in Beziehung zu dem Winkelsignal des Winkellagegebers gesetzt werden. Zu diesem Zweck umfasst die elektrische Maschine 100 eine Bestimmungsschaltung 111. Die Bestimmungsschaltung kann die Signale des Winkellagegebers 103 und des Spannungsmessers 109 verarbeiten und eine Phasenverschiebung oder einen Winkelunterschied zwischen beiden Signalen berechnen. Die Bestimmungsschaltung 111 kann beispielsweise durch ein Steuergerät mit einer zentralen Recheneinheit (CPU) gebildet werden

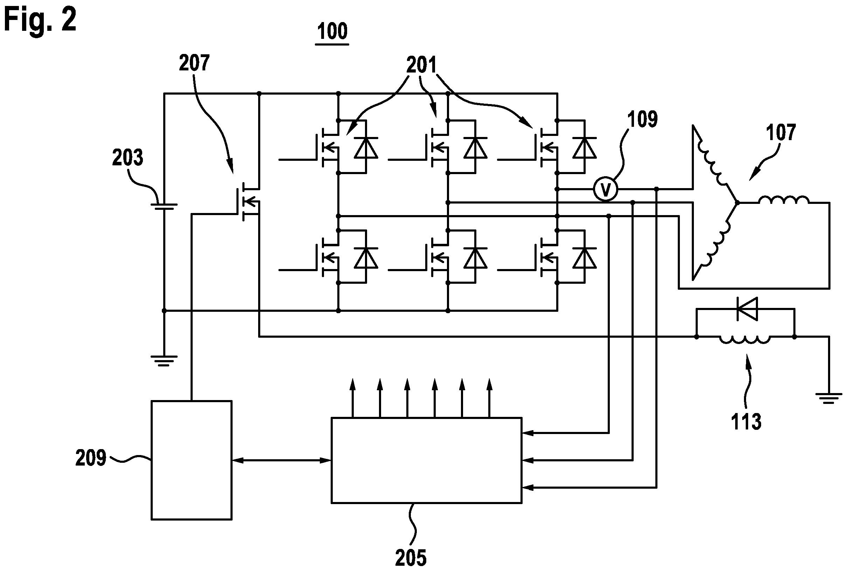

Fig. 2 zeigt ein Schaltbild einer 3-phasigen elektrischen Maschine 100.

Die Schaltelemente 201, wie beispielsweise MOSFETs, sind über Stromschienen einerseits mit der Ständerwicklung 107 und andererseits mit Gleichspannungsanschlüssen des Startergenerators verbunden. Die Gleichspannungsanschlüsse des Startergenerators sind wiederum mit einer Batterie des Kraftfahrzeugs verbunden. Diese kann im Gegensatz zu einer Spannung von 12V wie in üblichen, in Kraftfahrzeugen verwendeten Batterien, auch andere Spannungen wie z.B. 48V aufweisen. Die Gate-Anschlüsse der MOSFETs sind mit einer Ansteuerlogik 205 verbunden, die die Bestimmungsschaltung 111 umfasst. Durch Auswertung der Lage des Läufers 105 werden die Ein- und Ausschaltzeitpunkte der einzelnen MOSFETs bestimmt.

Die Erregerwicklung 113 wird durch einen Leistungsschalter 207 getaktet ein- und ausgeschaltet, so dass der zu der Erregerwicklung 113 zugeführte Strom gesteuert und begrenzt werden kann. Die Ansteuerung des Leistungsschalters 207 erfolgt durch einen Feldregler 209. Die Regelung des Erregerstroms kann über eine klassische 2-Punkt Regelung erfolgen. An den Anschlüssen der Ständerwicklung 107 wird von der Spannungsmesseinrichtung 109 mindestens eine Phasenspannung gemessen.

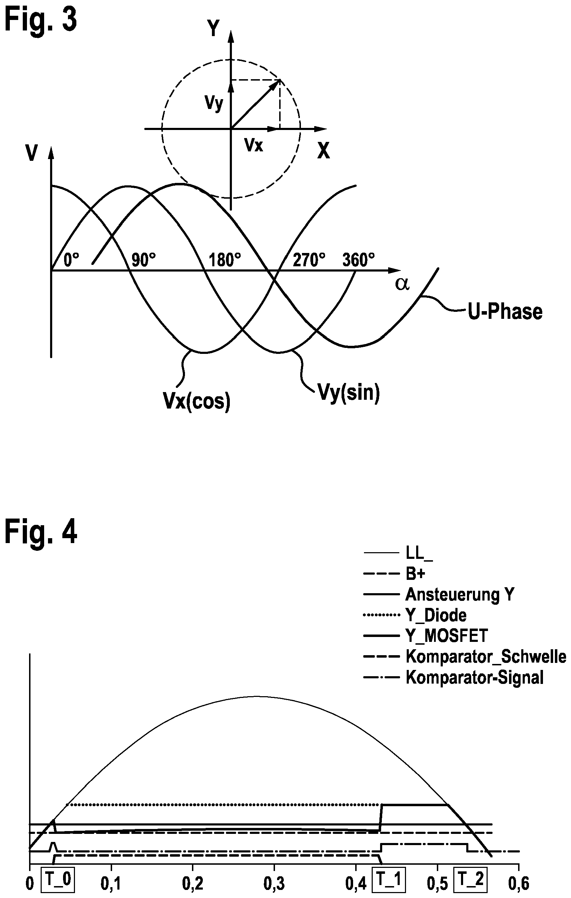

Fig. 3 zeigt die vom Winkellagegeber oder Rotorlagesensor 103 zurückgelieferten Signale Vy(sin) und Vx(cos) und die von der Spannungsmesseinrichtung an der Ständerwicklung erfasste Spannung U-Phase bei einer elektrischen Maschine mit einer Polpaaranzahl von 1. Bei den Signalen des Winkellagegebers 103 handelt es sich um zwei um 90° zueinander versetzte Sinussignale, aus denen über eine Arcustangens-Berechnung ein erster Drehwinkel des Läufers berechnet werden kann. Die Nulllage dieses Winkelsignals orientiert sich an der Einbaulage des Sensormagnets, die in der Regel nicht mit der Orientierung des durch die Erregerspule erzeugten Rotorfeldes übereinstimmt. Bei einer höheren Polpaarzahl erhöht sich entsprechend die Frequenz der gemessenen Phasenspannung.

Dieses Magnetfeld induziert bei Drehung des Läufers 105 eine annähernd sinusförmige Spannung U-Phase in den Ständerwicklungen 107, die so genannte Polradspannung, die an den Wicklungsenden der Ständerwicklung 107 gemessen werden kann, solange kein Strom in der Ständerwicklung fließt. Diese Spannung U-Phase wird zum Abgleich der Winkelposition verwendet, indem ein zweiter Drehwinkel bestimmt wird. Die Maschine kann hierzu mit einer konstanten Drehzahl betrieben werden. Allerdings ist es nicht notwendig, dass die Drehzahl einen vorgegeben Wert aufweist.

Die Höhe des Erregerstroms wird in Abhängigkeit der Drehzahl derart eingestellt, dass die Polradspannung U-Phase, die am Phasenpunkt gemessen wird, eine Spannung des Bordnetzes nicht überschreitet, da bei Überschreiten der Spannung des Bordnetzes an den Ständerwicklungen 107 ein Strom fließen würde, der aufgrund der Ständerinduktivitat die Phasenlage des Spannungssignals U-Phase verändern würde.

Daher wird in Erregerwicklung 113 ein definierter Erregerstrom eingestellt. Die Höhe der Drehzahl und des Erregerstroms der Erregerwicklung 113 werden derart gewählt, dass die elektrische Maschine 100 knapp unter ihrer generatorischen Angehdrehzahl betrieben wird und gerade noch keinen Strom ins angeschlossene Bordnetz abgegeben wird.

Wird nun die Polradspannung U-Phase und das von Winkelsensor erzeugte Winkelsignal Vy(sin) und Vx(cos) gemessen, so lassen sich die Phasenverschiebung der Signale und damit ein Korrekturwinkel zwischen dem ersten und dem zweiten Winkel bestimmen. Dieser Korrekturwinkel stellt einen Nulloffset dar.

Der Nulloffset wird in geeigneter Form in einem nicht-flüchtigen Speicher der Ansteuersoftware der elektrischen Maschine 100 hinterlegt. Vorzugsweise werden die Drehzahl und der Erregerstrom des Läufers so gewählt, dass eine Plausibilisierung des ersten und des zweiten Drehwinkels im Fahrzeug bei Leerlaufdrehzahl vorgenommen werden kann. Dazu kann beispielsweise der erste Drehwinkel um den Korrekturwinkel korrigiert werden und dann mit dem zweiten Drehwinkel verglichen werden. Weichen der korrigierte erste Drehwinkel und der zweite Drehwinkel voneinander ab, kann ein Fehlersignal ausgegeben werden.

Fig. 4 zeigt eine Komparatorik, die zur Regelung von aktiven Gleichrichtern verwendet wird. Die Komparatorik erzeugt ein Signal, sobald die Phasenspannung LL die Bordnetzspannung B+ überschreitet. Dieses Komparatorsignal kann zur Rotorlagekalibrierung verwendet werden.

Die Bestimmung der Phasenspannung U-Phase kann beispielsweise durch Aufnahme der Phasenspannung über einen Analog-Digital-Umsetzer-Eingang (ADC-Eingang) mit anschließender Auswertung der Nulldurchgänge oder Maximal -und Minimalwerte des Signals erfolgen. Außerdem kann das Phasensignal mittels des Komparatorsignals und einer anschließenden Ermittlung der Phasenverschiebung bewertet werden.

In einer anderen Ausführungsform kann der Erregerstrom derart gewählt werden, dass ein minimaler Generatorstrom ins Bordnetz abgegeben wird, d.h. dass die Polradspannung minimal höher ist als die Bordnetzspannung B+. In diesem Fall können zur Erfassung der Phasenlage die Komparatorsignale verwendet werden, die auch für die aktive Gleichrichtung verwendet werden.

Das Verfahren kann mit unterschiedlichen Winkelerfassungssystemen als Winkellagegeber verwendet werden, wie beispielsweise einem Inkrementalgeber. Im Allgemeinen schränken die in der Beschreibung und den Figuren erläuterten Gegenstände den Schutzbereich der Erfindung nach den Ansprüchen nicht ein. Alle gezeigten und beschriebenen Merkmale können in beliebiger Weise sinnvoll miteinander kombiniert werden, um gleichzeitig deren vorteilhafte Wirkungen zu erzielen.

Im Allgemeinen kann das erfindungsgemäße Verfahren auch bei elektrischen Maschinen mit einer magnetischen Polpaarzahl verwendet werden, die größer als 1 ist.

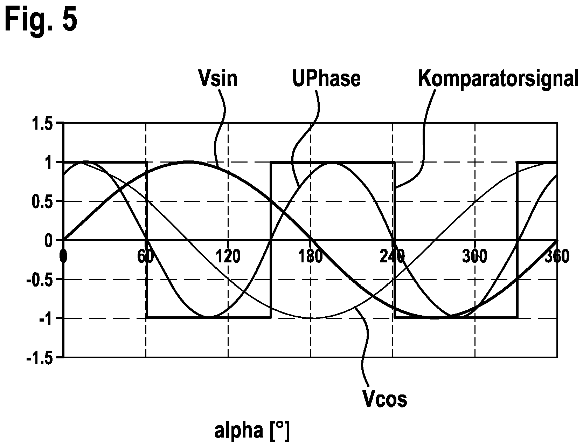

Fig. 5 zeigt die Signalverläufe von einem Winkelgeber und einer Phasenspannung für eine elektrische Maschine mit zwei Polpaaren. Da die Phasenspannung die zweifache Frequenz aufweist, ergibt die Auswertung zwei unterschiedliche Nulloffsetwerte, da innerhalb einer mechanischen Umdrehung zwei Nulldurchgänge der Phasenspannung ausgewertet werden können, beispielsweise bei 150° und 330°. Durch eine Komparatorschaltung kann ein digitales Signal erzeugt werden, so dass die Schaltflanken für die Offsetkompensation ausgewertet werden können.

Bei einem ideal symmetrisch aufgebauten Rotor haben beide Nulloffset-Werte eine Differenz von 360°/Polpaarzahl. Wird dieser auf eine mechanische Umdrehung bezogene Offset-Wert auf die elektrische Frequenz der Phasenspannung umgerechnet, so ergibt sich bei jedem Nulldurchgang derselbe Wert. Die Rotorlagekompensation kann dann wie beschrieben vorgenommen werden.

Ergeben sich unterschiedliche Offset-Werte, beispielsweise der Rotoraufbau aufgrund von Fertigungstoleranzen nicht exakt symmetrisch ist, bietet das Verfahren in diesem Fall zusätzlich die Möglichkeit, diese Unsymmetrie durch eine winkelabhängige Kennlinie zu kompensieren. Im vorliegenden Fall hat diese Kennlinie zwei Stützstellen, d.h. die beiden unterschiedlich ermittelten Offsetwerte, zwischen denen linear interpoliert werden kann. Diese Kennlinie ist umso genauer, je höher die Polpaarzahl der Maschine ist. Beispielsweise ergibt sich bei einer Polpaarzahl von acht eine Kennlinie mit acht Stützstellen.

Daneben können auch mehrere Phasenspannungen der elektrischen Maschine zur Offset-Wertbestimmung genutzt werden, so dass sich zusätzliche Stützstellen ergeben. Bei einer dreiphasigen Maschine mit einer Polpaarzahl von acht ergeben sich dadurch beispielsweise 24 Stützstellen.

### BEZUGSZEICHENLISTE

- 100: elektrische Maschine
- 103: Winkellagegeber
- 105: Läufer
- 107: Ständerwicklung
- 109: Spannungsmesser
- 111: Bestimmungsschaltung
- 113: Erregerwicklung
- 115: Drehachse
- 117: Ständer
- 201: Schaltelemente
- 203: Batterie
- 205: Ansteuerlogik
- 207: Leistungsschalter
- 209: Feldregler
- U-Phase: Polradspannung
- Vx(cos): Winkellagegeber-Signal
- Vy(sin): Winkellagegeber-Signal
- B+: Bordnetzspannung
- α: Läuferwinkel

## Patentansprüche

1. Elektrische Maschine (100) mit:
einem Winkellagegeber (103) zum Bestimmen eines ersten Drehwinkels eines Läufers (105);
einer von einem Erregerstrom durchflossenen Erregerwicklung (113) des Läufers (105)
einer Ständerwicklung (107) zum Erzeugen eines Magnetfeldes;
einem Spannungsmesser (109) zum Erfassen einer Polradspannung an den Enden der Ständerwicklung (107) bei einer Drehung des Läufers (105); und
einer Bestimmungsschaltung (111) zum Bestimmen eines zweiten Drehwinkels aus der Polradspannung und zum Bestimmen eines Winkelunterschieds zwischen dem ersten und dem zweiten Drehwinkel,
wobei der Erregerstrom derart gewählt ist, dass die Polradspannung höher ist als eine Bordnetzspannung (B+).

2. Elektrische Maschine (100) nach Anspruch 1, wobei die elektrische Maschine (100) einen Speicher zum Speichern des Winkelunterschieds umfasst.

3. Elektrische Maschine (100) nach einem der vorangehenden Ansprüche, wobei die elektrische Maschine (100) eine Erregerwicklung (113) auf dem Läufer (105) und einen Strombegrenzer zum Begrenzen eines maximalen Erregerstroms in der Erregerwicklung umfasst.

4. Elektrische Maschine (100) nach Anspruch 3, wobei der Strombegrenzer ausgebildet ist, die Polradspannung durch Einstellen des maximalen Erregerstroms unterhalb einer Referenzspannung einzustellen.

5. Elektrische Maschine (100) nach einem der vorangehenden Ansprüche, wobei die elektrische Maschine (100) einen Vergleicher zum Vergleichen der Polradspannung mit einer Referenzspannung umfasst, um ein Vergleichssignal zu erzeugen.

6. Elektrische Maschine (100) nach Anspruch 5, wobei der Vergleicher ausgebildet ist, das Vergleichssignal auszugeben, sobald die Polradspannung die Referenzspannung unterschreitet.

7. Elektrische Maschine (100) nach Anspruch 6, wobei die Bestimmungsschaltung (111) ausgebildet ist, den Winkelunterschied bei Vorliegen des Vergleichssignals zu bestimmen.

8. Elektrische Maschine (100) nach einem der vorangehenden Ansprüche, wobei die Bestimmungsschaltung (111) ausgebildet ist, den ersten Drehwinkel um den Winkelunterschied zu korrigieren, um einen korrigierten Drehwinkel zu erhalten.

9. Elektrische Maschine (100) nach Anspruch 8, wobei die Bestimmungsschaltung (111) ausgebildet ist, den korrigierten Drehwinkel mit dem zweiten Drehwinkel zu vergleichen.

10. Elektrische Maschine (100) nach Anspruch 9, wobei die Bestimmungsschaltung (111) ausgebildet ist, ein Fehlersignal auszugeben, falls der korrigierte Drehwinkel und der zweiten Drehwinkel voneinander abweichen.

11. Elektrische Maschine (100) nach einem der vorangehenden Ansprüche, wobei die elektrische Maschine (100) eine Ansteuervorrichtung zum Erzeugen eines Drehfelds synchron zum korrigierten ersten Drehwinkel umfasst.

12. Elektrische Maschine (100) nach einem der vorangehenden Ansprüche, wobei die Anzahl der magnetischen Polpaare größer als eins ist.

13. Verfahren zum Betreiben einer elektrischen Maschine (100), mit den Schritten:
a. Erfassen eines ersten Drehwinkels eines Läufers (105) der elektrischen Maschine (100) durch einen Winkellagegeber (103);
b. Erfassen einer Polradspannung an den Enden einer Ständerwicklung (107) bei einer Drehung des Läufers (105);
c. Bestimmen eines zweiten Drehwinkels aus der Polradspannung; und
d. Bestimmen eines Winkelunterschieds zwischen dem ersten und dem zweiten Drehwinkel,
- wobei ein Erregerstrom, der eine Erregerwicklung (113) des Läufers (105) durchfließt, derart gewählt wird, dass die Polradspannung höher ist als eine Bordnetzspannung (B+).

14. Verfahren nach Anspruch 13, weiter mit dem Schritt eines Ermittelns des Winkelunterschiedes an mehreren Positionen entlang eines Rotorumfangs.

15. Verfahren nach einem der Ansprüche 13 oder 14, weiter mit dem Schritt eines Korrigierens des ersten Drehwinkels um den Winkelunterschied, um einen korrigierten Drehwinkel zu erhalten.

16. Verfahren nach einem der Anspruch 15, weiter mit dem Schritt eines Erzeugens eines Drehfelds synchron zum korrigierten, ersten Drehwinkel.

## Claims

1. Electric machine (100) having:
an angular position sensor (103) for determining a first angle of rotation of a rotor (105);
a field winding (113) of the rotor (105), through which field winding a field current flows;
a stator winding (107) for generating a magnetic field;
a voltmeter (109) for detecting a synchronous internal voltage at the ends of the stator winding (107) when the rotor (105) rotates; and
a determination circuit (111) for determining a second angle of rotation from the synchronous internal voltage and for determining an angle difference between the first and the second angle of rotation,
wherein the field current is selected in such a way that the synchronous internal voltage is higher than an onboard power supply system voltage (B+).

2. Electric machine (100) according to Claim 1, wherein the electric machine (100) comprises a storage means for storing the angle difference.

3. Electric machine (100) according to either of the preceding claims, wherein the electric machine (100) comprises a field winding (113) on the rotor (105) and a current limiter for limiting a maximum field current in the field winding.

4. Electric machine (100) according to Claim 3, wherein the current limiter is configured to set the synchronous internal voltage by setting the maximum field current below a reference voltage.

5. Electric machine (100) according to one of the preceding claims, wherein the electric machine (100) comprises a comparator for comparing the synchronous internal voltage with a reference voltage, in order to generate a comparison signal.

6. Electric machine (100) according to Claim 5, wherein the comparator is configured to emit the comparison signal as soon as the synchronous internal voltage falls below the reference voltage.

7. Electric machine (100) according to Claim 6, wherein the determination circuit (111) is configured to determine the angle difference in the presence of the comparison signal.

8. Electric machine (100) according to one of the preceding claims, wherein the determination circuit (111) is configured to correct the first angle of rotation by the angle difference, in order to obtain a corrected angle of rotation.

9. Electric machine (100) according to Claim 8, wherein the determination circuit (111) is configured to compare the corrected angle of rotation with the second angle of rotation.

10. Electric machine (100) according to Claim 9, wherein the determination circuit (111) is configured to emit a fault signal if the corrected angle of rotation and the second angle of rotation differ from one another.

11. Electric machine (100) according to one of the preceding claims, wherein the electric machine (100) comprises an actuation apparatus for generating a rotating field synchronously with respect to the corrected first angle of rotation.

12. Electric machine (100) according to one of the preceding claims, wherein the number of magnetic pole pairs is greater than one.

13. Method for operating an electric machine (100), having the following steps:
a. detection of a first angle of rotation of a rotor (105) of the electric machine (100) by an angular position sensor (103);
b. detection of a synchronous internal voltage at the ends of a stator winding (107) when the rotor (105) rotates;
c. determination of a second angle of rotation from the synchronous internal voltage; and
d. determination of an angle difference between the first and the second angle of rotation,
- wherein a field current, which flows through a field winding (113) of the rotor (105), is selected in such a way that the synchronous internal voltage is higher than an onboard power supply system voltage (B+).

14. Method according to Claim 13, further having the step of determination of the angle difference at a plurality of positions along a rotor circumference.

15. Method according to either of Claims 13 and 14, further having the step of correction of the first angle of rotation by the angle difference, in order to obtain a corrected angle of rotation.

16. Method according to one of Claim 15, further having the step of generation of a rotating field synchronously with respect to the corrected first angle of rotation.

## Revendications

1. Machine électrique (100), comprenant :
un codeur de position angulaire (103) destiné à déterminer un premier angle de rotation d'un rotor (105) ;
un enroulement excitateur (113) du rotor (105) traversé par un courant d'excitation ;
un enroulement statorique (107) destiné à générer un champ magnétique ;
un mesureur de tension (109) destiné à acquérir une force électromotrice synchrone aux extrémités de l'enroulement statorique (107) lors d'une rotation du rotor (105) ; et
un circuit de détermination (111) destiné à déterminer un deuxième angle de rotation à partir de la force électromotrice synchrone et à déterminer une différence angulaire entre le premier et le deuxième angles de rotation,
le courant d'excitation étant choisi de telle sorte que la force électromotrice synchrone est supérieure à une tension de réseau de bord (B+).

2. Machine électrique (100) selon la revendication 1, la machine électrique (100) comportant une mémoire destinée à mémoriser la différence angulaire.

3. Machine électrique (100) selon l'une des revendications précédentes, la machine électrique (100) comportant un enroulement excitateur (113) sur le rotor (105) et un limiteur de courant destiné à limiter un courant d'excitation maximal dans l'enroulement excitateur.

4. Machine électrique (100) selon la revendication 3, le limiteur de courant étant conçu pour régler la force électromotrice synchrone au-dessous d'une tension de référence par réglage du courant d'excitation maximal.

5. Machine électrique (100) selon l'une des revendications précédentes, la machine électrique (100) comportant un comparateur destiné à comparer la force électromotrice synchrone à une tension de référence afin de générer un signal de comparaison.

6. Machine électrique (100) selon la revendication 5, le comparateur étant configuré pour délivrer le signal de comparaison dès que la force électromotrice synchrone devient inférieure à la tension de référence.

7. Machine électrique (100) selon la revendication 6, le circuit de détermination (111) étant configuré pour déterminer la différence angulaire en présence du signal de comparaison.

8. Machine électrique (100) selon l'une des revendications précédentes, le circuit de détermination (111) étant configuré pour corriger le premier angle de rotation de la différence angulaire afin d'obtenir un angle de rotation corrigé.

9. Machine électrique (100) selon la revendication 8, le circuit de détermination (111) étant configuré pour comparer l'angle de rotation corrigé au deuxième angle de rotation.

10. Machine électrique (100) selon la revendication 9, le circuit de détermination (111) étant configuré pour délivrer un signal de défaut dans le cas où l'angle de rotation corrigé et le deuxième angle de rotation s'écartent l'un de l'autre.

11. Machine électrique (100) selon l'une des revendications précédentes, la machine électrique (100) comportant un dispositif de commande destiné à générer un champ tournant synchrone avec le premier angle de rotation corrigé.

12. Machine électrique (100) selon l'une des revendications précédentes, le nombre de pôles magnétiques étant supérieur à un.

13. Procédé pour faire fonctionner une machine électrique (100), comprenant les étapes suivantes :
a. acquisition d'un premier angle de rotation d'un rotor (105) de la machine électrique (100) par un codeur de position angulaire (103) ;
b. acquisition d'une force électromotrice synchrone aux extrémités de l'enroulement statorique (107) lors d'une rotation du rotor (105) ;
c. détermination d'un deuxième angle de rotation à partir de la force électromotrice synchrone ; et
d. détermination d'une différence angulaire entre le premier et le deuxième angles de rotation,
- le courant d'excitation qui circule à travers un enroulement excitateur (113) du rotor (105) étant choisi de telle sorte que la force électromotrice synchrone est supérieure à une tension de réseau de bord (B+).

14. Procédé selon la revendication 13, comprenant en outre l'étape d'une détermination de la différence angulaire à plusieurs positions le long d'une circonférence du rotor.

15. Procédé selon l'une des revendications 13 ou 14, comprenant en outre l'étape d'une correction du premier angle de rotation de la différence angulaire afin d'obtenir un angle de rotation corrigé.

16. Procédé selon l'une de la revendication 15, comprenant en outre l'étape d'une génération d'un champ tournant synchrone avec le premier angle de rotation corrigé.
